(19) **Europäisches Patentamt / European Patent Office / Office européen des brevets**

(11) **EP 2 185 417 B1**

(12) ## FASCICULE DE BREVET EUROPEEN

(45) Date de publication et mention de la délivrance du brevet:
**23.03.2011 Bulletin 2011/12**

(21) Numéro de dépôt: **08846520.8**

(22) Date de dépôt: **28.08.2008**

(51) Int Cl.:
**B64G 1/10** (2006.01)

(86) Numéro de dépôt international:
**PCT/FR2008/001210**

(87) Numéro de publication internationale:
**WO 2009/060139 (14.05.2009 Gazette 2009/20)**

(54) **INSTRUMENT D'ACQUISITION ET DE DISTRIBUTION D'IMAGES D'OBSERVATION TERRESTRE A HAUTE RESOLUTION SPATIALE ET TEMPORELLE**

GERÄT ZUM ERFASSEN UND RUNDSENDEN VON ERDBEOBACHTUNGSBILDERN MIT HOHER RÄUMLICHER UND ZEITLICHER AUFLÖSUNG

DEVICE FOR ACQUIRING AND BROADCASTING EARTH OBSERVATION IMAGES WITH HIGH SPACE AND TIME RESOLUTION

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **31.08.2007 FR 0706117**

(43) Date de publication de la demande:
**19.05.2010 Bulletin 2010/20**

(73) Titulaire: **Centre National d'Etudes Spatiales (C.N.E.S.)**
**75039 Paris Cedex 01 (FR)**

(72) Inventeur: **ANTIKIDIS, Jean-Pierre**
**F-31320 Castanet (FR)**

(74) Mandataire: **Cabinet BARRE LAFORGUE & associés**
**95, rue des Amidonniers**
**31000 Toulouse (FR)**

(56) Documents cités:
**EP-A- 0 992 764          EP-A- 1 106 964**
**FR-A- 2 893 794          JP-A- 2001 285 170**
**US-A1- 2003 095 181**

Printed by Jouve, 75001 PARIS (FR)

**Description**

L'invention concerne un instrument d'acquisition et de fourniture d'images satellitaires d'observation terrestre présentant une résolution-sol élevée (10 mètres ou moins, notamment de l'ordre d'un mètre) et une fréquence élevée de couverture globale de la Terre (2 semaines ou moins, notamment de l'ordre de la journée).

Dans tout le texte, la fréquence de couverture globale de la Terre désigne la fréquence avec laquelle un instrument permet une prise de vue complète de la Terre.

L'observation de la Terre par des instruments satellisés a pris naissance dans les années 1950 avec le développement d'instruments dédiés notamment à la météorologie. De tels instruments n'ont cessé de se développer depuis, privilégiant alternativement, selon les applications visées, la résolution-sol ou la fréquence de rafraîchissement.

On compte aujourd'hui un grand nombre d'instruments d'observation terrestre parmi lesquels LANDSAT, MODIS, IKONOS, QUICK BIRD, EROS, SPOT-5, SPOT-4, etc. Ces instruments permettent de répondre à de nombreux besoins en imagerie dans des domaines aussi variés que l'agriculture, la cartographie, le cadastre, la défense, l'environnement, la planification urbaine, les télécommunications, la gestion des risques, la gestion des ressources renouvelables, etc.

Les instruments IKONOS, QUICKBIRD, EROS, etc., sont des satellites à très hautes résolutions qui permettent des résolutions-sol de l'ordre du mètre. En revanche, ils présentent des taux de rafraîchissement de l'ensemble du globe supérieurs à un mois.

Les instruments MODIS, MERIS, etc. sont des instruments qui présentent des résolutions faibles, mais des taux de rafraîchissement de l'ensemble du globe élevés, de l'ordre de 3 jours à une semaine.

En d'autres termes, au vu de l'état de la technique, la conception d'un instrument d'acquisition et de fourniture d'images satellitaires d'observation terrestre est soumise à des contraintes contradictoires. On a ainsi le choix entre un instrument à résolution spatiale élevée -de l'ordre du mètre- mais à fréquence de couverture globale faible -de l'ordre de la semaine ou du mois-, et un instrument à fréquence de couverture globale élevée -de l'ordre de la journée- mais à résolution spatiale faible -de l'ordre de 100 mètres-.

Des solutions alternatives ont été proposées pour pouvoir bénéficier d'une fréquence élevée de couverture de zones spécifiques prédéterminées, tout en bénéficiant d'une résolution spatiale intéressante. Elle consiste à recourir à un ou plusieurs satellites équipés d'instruments optiques d'acquisition d'images adaptés pour permettre un dépointage de ces instruments. En effet, le fait de pouvoir acquérir des images en dehors de la trace naturelle d'un satellite permet l'observation, au cours de plusieurs rotations successives du satellite, de la même zone géographique.

Par exemple, la constellation de satellites SPOT offre une capacité d'acquisition et un taux de rafraichissement qui permet d'acquérir une image d'une zone prédéterminée du globe chaque jour. Cette constellation comprend une pluralité de satellites, placés sur une orbite polaire, circulaire, héliosynchrone et en phase par rapport à la Terre. Chaque satellite présente un cycle de 26 jours. Chaque satellite comprend des instruments optiques, des enregistreurs de données et des systèmes de transmission des images vers des stations de réception au sol. Les instruments optiques sont adaptés pour assurer des visées obliques paramétrables, de telle sorte qu'une même région peut être observée plusieurs fois au cours du cycle de 26 jours. Les enregistreurs de données permettent de stocker les images à bord si le satellite n'est pas en visibilité d'une station sol.

Cette constellation peut ainsi présenter une fréquence élevée de couverture d'une zone spécifique de la Terre. Néanmoins, la fréquence de couverture globale ne peut être inférieure à 26 jours. Plus encore, si la constellation est programmée de telle sorte que de nombreux dépointages sont effectués au cours du cycle de 26 jours, la fréquence de couverture globale de la Terre peut être largement supérieure à 26 jours.

Un autre inconvénient d'une telle solution réside dans le coût de la fabrication, de l'installation, de la gestion et de la maintenance d'une constellation de satellites à dépointage. En particulier, une telle constellation nécessite l'installation et la gestion au sol d'une pluralité de stations sol opérées de façon autonome les unes par rapport aux autres et adaptées pour envoyer les données images reçues vers un serveur central de sauvegarde des images en vue de leurs distributions. De plus, chaque instrument de chaque satellite est piloté depuis le sol par une équipe de spécialistes chargée de déterminer et d'optimiser, en fonction des demandes, les dépointages des instruments optiques. De plus, chaque satellite doit comprendre des enregistreurs pour pallier une absence de visibilité d'une station sol. Chaque satellite comprend en outre un système de transmission au sol spécifique.

Par ailleurs, une telle solution se heurte à une difficulté pratique majeure. En effet, la couverture de l'ensemble du globe terrestre par une telle constellation de satellites en vue de fournir des images présentant une résolution spatiale de l'ordre du mètre et une fréquence de couverture globale de l'ordre de la journée impose la gestion par le serveur central de l'ordre de 1 500 Téraoctets de données par jour, soit 170 Giga-octets par seconde, dépassant largement les capacités de transmission satellitaire et de traitement sol accessibles avec les technologies et les architectures des serveurs actuellement disponibles. Voir FR-A-2 893 794 (Deutsches Zentrum für Luft und Raumfahrt).

L'invention vise à pallier ces inconvénients, à surmonter ces difficultés et à proposer un instrument d'acquisition et de fourniture d'images d'observation de la Terre qui présente une résolution spatiale et une résolution temporelle élevées, notamment de l'ordre respectivement du mètre et de la journée.

L'invention vise également à proposer un tel instrument qui ne fait appel à aucun dépointage d'instruments optiques permettant ainsi une utilisation de satellites simplifiés, de coûts faibles et aptes à fonctionner sans opérations complexes.

L'invention vise également à proposer un tel instrument qui ne nécessite pas de serveur central de distribution des images.

L'invention vise également à proposer un tel instrument qui ne nécessite pas de maintenance spécifique.

L'invention vise également à proposer un tel instrument adapté pour alimenter les vecteurs d'information de masse disponibles sur le réseau Internet.

Pour ce faire, l'invention concerne un instrument d'acquisition et de distribution d'images d'observation de la Terre de circonférence moyenne C comprenant :

- une constellation de satellites, dite couche spatiale d'acquisition d'images, chaque satellite présentant une fauchée *F* et une orbite basse de telle sorte qu'il puisse décrire un nombre *ORB* (*ORB > 1*) d'orbites en une journée, et étant équipé d'au moins un dispositif optique d'acquisition d'images,
- une pluralité de dispositifs terrestres de traitement et de distribution d'images, dite couche terrestre de traitement et de distribution d'images,
- un réseau de transmission de données, dit couche de télécommunications, adapté pour assurer un transfert des images prises par la couche spatiale d'acquisition d'images vers ladite couche terrestre de traitement et de distribution d'images, ladite couche de télécommunications comprenant :

  • pour chaque satellite, au moins un module d'émission adapté pour émettre après chaque acquisition d'image par un dispositif optique d'acquisition d'images de ce satellite, l'image acquise vers ladite couche terrestre de traitement et de distribution d'images,
  • pour chaque dispositif terrestre de traitement et de distribution d'images, au moins un module de réception adapté pour recevoir des images issues de ladite couche spatiale d'acquisition d'images,

caractérisé en ce que :

- ladite couche spatiale d'acquisition d'images comprend, pour chaque satellite, au moins un dispositif optique d'acquisition d'images à visée fixe présentant une résolution spatiale élevée,
- ladite couche terrestre de traitement et de distribution d'images comprend, pour chaque dispositif terrestre de traitement et de distribution d'images, au moins une ligne de communications reliant ce dispositif terrestre de traitement et de distribution d'images et au moins un dispositif terrestre de traitement et de distribution d'images immédiatement adjacent, de manière à permettre des recouvrements des images reçues par ce dispositif terrestre de traitement et de distribution d'images avec des images reçues par ce(ces) dispositif(s) terrestre de traitement et de distribution d'images immédiatement adj acent(s),

- chaque dispositif de traitement et de distribution d'images comprend :

  • une unité de traitement adaptée pour traiter les images reçues par le module de réception de ce dispositif terrestre de traitement et de distribution d'images,
  • des moyens de mémorisation des images traitées par l'unité de traitement,
  • une connexion à un réseau numérique de manière à pouvoir mettre lesdites images mémorisées à disposition d'utilisateurs reliés à ce réseau numérique.

Un instrument selon l'invention comprend une pluralité de satellites, chaque satellite comprenant un dispositif à visée fixe et un module d'émission de chaque image acquise vers la couche de traitement par l'intermédiaire de la couche de télécommunications. Cette émission est subséquente à chaque acquisition de telle sorte qu'un satellite d'une couche spatiale d'un instrument selon l'invention n'a pas besoin d'être équipé d'enregistreurs de données à bord. En particulier, il n'y a plus lieu d'attendre que le satellite soit en visibilité d'une station sol. Si un module de réception est en visibilité du module d'émission, ce dernier reçoit l'image et la traite. Dans le cas contraire, l'image est perdue. En d'autres termes, chaque dispositif d'acquisition d'images à visée fixe d'un satellite d'un instrument selon l'invention opère des prises de vues systématiques suivies d'envois systématiques vers le sol. Les dispositifs d'émission des images ne se préoccupent pas du devenir des images émises -réception par un module de réception ou échec de la réception-. L'image suivante est quoi qu'il arrive acquise et envoyée à son tour vers le sol.

Un instrument selon l'invention permet de contourner les limites technologiques et économiques des solutions de l'art antérieur par la mise en oeuvre de trois couches techniques indissociables et emboîtées à l'échelle de la planète -la couche spatiale d'acquisition d'images, la couché de télécommunications, et la couche terrestre de traitement et de distribution des image-. Un tel instrument assure une délocalisation de l'instrument crée à l'échelle de la Terre, ce qui permet une répartition des charges d'acquisition sur une pluralité de satellites, une répartition des communications sur l'ensemble des modules d'émission et de réception d'images, et une répartition de la gestion et de la distribution des images sur des dispositifs de traitement d'images interconnectés les uns aux autres. Cet éclatement des fonctionnalités d'un instrument selon l'invention permet de diluer les flux de données tout en simplifiant de façon drastique le fonctionnement et la gestion des satellites.

Un instrument selon l'invention présente une résolution spatiale élevée, chaque dispositif d'acquisition d'images présentant une résolution spatiale élevée. Dans tout le texte, les termes « résolution spatiale élevée » désignent une résolution inférieure à 100 mètres, notamment de l'ordre du mètre.

Avantageusement et selon l'invention, chaque satellite de ladite couche spatiale d'acquisition d'images comprend au moins un instrument optique d'acquisition d'images à visée fixe présentant une résolution spatiale de l'ordre du mètre.

Avantageusement et selon l'invention :

- chaque module d'émission de ladite couche de télécommunication est adapté pour communiquer avec au moins un module d'émission adjacent,
- chaque module de réception de ladite couche de télécommunication est adapté pour communiquer avec au moins un module de réception adjacent.

La constellation de satellite d'un instrument selon l'invention est adaptée pour couvrir l'ensemble du globe terrestre ou au moins une majeure partie du globe terrestre.

Avantageusement et selon l'invention, lesdits satellites de ladite couche spatiale d'acquisition d'images, lesdits dispositifs terrestres de traitement et de distribution d'images de ladite couche terrestre de traitement et de distribution d'images, lesdits modules d'émission d'images de ladite couche de télécommunications et lesdits modules de réception d'images de ladite couche de télécommunications sont géographiquement distribués sur l'ensemble de la Terre.

Avantageusement et selon l'invention, ladite couche spatiale d'acquisition d'images comprend au moins $N$ satellites, où $N = 2 * \dfrac{C}{ORB * F}$, et ladite couche terrestre de traitement et de distribution d'images comprend au moins $M$ dispositifs de traitement d'images distribués sur la surface de la Terre, où $M = \alpha . \left( \dfrac{\tilde{C}}{\pi . r} \right)^2$, $r$ étant le rayon moyen des cercles de visibilité des modules de réception associés aux dispositifs terrestre de traitement et de distribution d'images et $\alpha$, un coefficient prédéterminé.

Ainsi, un satellite est constamment en visibilité d'au moins un module de réception d'images.

En particulier, pour un satellite qui décrit un nombre ORB d'orbites en une journée, la distance mesurée sur l'équateur entre deux passages est $C/_{ORB}$, Ainsi, si chaque satellite présente une fauchée $F$, le nombre de satellites nécessaire pour couvrir en une journée l'ensemble du globe est au moins $\dfrac{C}{ORB * F}$, En réalité, il faut au moins $N = 2 * \dfrac{C}{ORB * F}$, car au cours de l'orbite ascendante d'un satellite, la terre n'est pas éclairée par le soleil, seule l'orbite descendante permet une acquisition d'images.

Selon une variante de l'invention, les différents satellites exploitent tous la même orbite quasi-polaire héliosynchrone, et sont décalés dans le temps afin que leur point de passage respectif à l'équateur soient séparés d'une quantité égale à la valeur de leur fauchée $F$.

Ainsi, un instrument selon l'invention comprenant une constellation de $N$ satellites permet la prise de vue chaque jour de l'ensemble des points du globe, sans nécessiter de dépointage des instruments optiques.

Chaque dispositif optique d'un satellite d'un instrument selon l'invention présente une résolution spatiale élevée, avantageusement de l'ordre d'un mètre.

Ainsi, un instrument d'observation terrestre selon l'invention permet non seulement d'atteindre une résolution temporelle élevée, de l'ordre de la journée, mais également d'atteindre une résolution spatiale élevée, de l'ordre d'un mètre.

Un nombre deux fois plus élevé de satellites permet de multiplier par deux le taux de revisite.

Chaque image est transmise, aussitôt acquise, par la couche de télécommunications vers la couche terrestre de traitement et de distribution d'images. Selon une variante de l'invention, cette couche de télécommunications est adaptée pour transmettre chaque image reçue vers le dispositif terrestre de traitement et de distribution d'images le plus proche.

Chaque module de réception d'images de cette couche de télécommunications comprend avantageusement une antenne de réception présentant un cercle de visibilité de rayon r.

Selon une variante de l'invention, chaque dispositif terrestre de traitement et de distribution d'images est associé à un module de réception dédié à proximité de ce dispositif terrestre de traitement et de distribution d'images. Néanmoins, rien n'empêche de prévoir des modules de réception distants des dispositifs terrestres de traitement et de distribution d'images.

La couche terrestre de traitement et de distribution d'images comprend avantageusement $M$ dispositifs terrestres de traitement et de distribution d'images, où $M = \alpha . \left( \dfrac{\tilde{C}}{\pi . r} \right)^2$, où $\alpha$ est un coefficient prédéterminé qui détermine le taux de recouvrement.

$\alpha$ est un coefficient qui permet d'assurer un recouvrement des différents cercles de visibilité des antennes associées aux modules de réception. En pratique, $\alpha$ est compris entre 1,1 et 1,25 ce qui permet d'obtenir des taux de recouvrement des zones de visibilité compris entre 10 % et 25 %.

Ainsi, un satellite est, quelle que soit sa position, en visibilité d'au moins une antenne de réception d'une image.

Selon une variante de l'invention, la couche de télécommunications peut également comprendre d'autres dispositifs agencés entre la couche spatiale et la couche terrestre de traitement et de distribution d'images, comme des antennes relais, ou une constellation de satellites intermédiaires chargés de recevoir les images en provenance de la couche spatiale d'acquisition d'images et de les retransmettre au sol vers un dispositif de traitement et de distribution d'images.

Selon l'invention, chaque image est envoyée vers un dispositif terrestre de traitement et de distribution d'images de la couche terrestre de traitement et de distribution d'images. Ce dispositif terrestre de traitement et de distribution d'images est relié à un réseau numérique de telle sorte qu'un utilisateur relié à ce réseau numérique puisse récupérer cette image. Chaque dispositif terrestre de traitement et de distribution d'images est relié aux dispositifs terrestres de traitement et de distribution d'images immédiatement adjacents de telle sorte que les recouvrements d'images puissent être opérés. En effet, deux dispositifs terrestres de traitement et de distribution d'images adjacents reçoivent des images représentatives de zones voisines, étant donné que chaque dispositif terrestre de traitement et de distribution d'images ne peut recevoir que des images correspondant à sa zone de visibilité définie par son cercle de visibilité de rayon r. Chaque dispositif terrestre de traitement et de distribution d'images, par l'utilisation des lignes de télécommunications agencées entre deux dispositifs terrestre de traitement et de distribution d'images adjacents, peut créer une mosaïque locale.

Les images prises par un instrument selon l'invention ne sont pas centralisées. Elles sont constamment distribuées sur l'ensemble des dispositifs terrestres de traitement et de distribution d'images.

Un instrument selon l'invention réalise l'intégration des images, c'est-à-dire les corrections géométriques, les éventuelles corrections photométriques, les changements de repères et de coordonnées, les déterminations des frontières d'images et les recouvrements, par l'intermédiaire des différents dispositifs terrestres de traitement et de distribution d'images distribués sur la surface du globe. En d'autres termes, une partie de l'instrument est délocalisée au sol et cette partie d'instrument en charge de l'intégration des images est distribuée sur la surface du globe terrestre. Aussi, l'image terrestre globale créée par un instrument selon l'invention est constamment distribuée sur l'ensemble du globe. Chaque dispositif terrestre de traitement et de distribution d'images comprend, dans ses moyens de mémorisation, une fraction de l'image terrestre globale.

De plus, chaque dispositif terrestre de traitement et de distribution d'images étant adapté pour recevoir uniquement les images en provenance des satellites qui le survole, les images reçues par un dispositif terrestre de traitement et de distribution d'images couvrent une région prédéterminée.

Dès lors, un utilisateur qui souhaite accéder à une ou plusieurs images d'une région du globe terrestre peut déterminer à quel dispositif terrestre de traitement et de distribution d'images il doit envoyer sa requête.

Dans tout le texte, un « utilisateur » désigne une machine ou une association machine/humain adaptée pour établir une communication avec un dispositif de traitement par l'intermédiaire du réseau numérique.

La couche spatiale d'acquisition d'images d'un instrument selon l'invention comprend une constellation de satellites comprenant au moins $N$ satellites. Le nombre idéal de satellites dépend de la fauchée de chaque satellite.

Avantageusement et selon l'invention, la couche spatiale d'acquisition d'images comprend au moins $N$ satellites, chaque satellite présentant une fauchée de l'ordre de $2500/N$ kilomètres.

Selon une variante de l'invention, la couche spatiale d'acquisition d'images comprend au moins 25 satellites, chaque satellite présentant une fauchée de l'ordre de 100 kilomètres.

Selon une autre variante de l'invention, la couche spatiale d'acquisition d'images comprend au moins 250 satellites, chaque satellite présentant une fauchée de l'ordre de 10 kilomètres.

Chaque satellite de la couche spatiale d'acquisition d'images d'un instrument selon l'invention comprend un module d'émission des images acquises par un dispositif optique à visée fixe adapté pour émettre, après chaque acquisition d'images, l'image acquise par la couche de télécommunications de manière qu'elle soit transmise vers ladite couche terrestre de traitement et de distribution des images.

Ce module d'émission peut être de tous types connus.

Avantageusement et selon l'invention, pour chaque satellite, le module d'émission des images de ladite couche de télécommunications est adapté pour assurer une compression des images avant leur transfert vers ladite couche terrestre de traitement et de distribution des images.

Cette compression des images peut être réalisée par tous types de moyens connus, par exemple par des moyens logiciels. Il peut s'agir d'une compression JPEG, MPEG, ZIP, RAR, etc.

Avantageusement et selon l'invention, cette compression effectuée par le module d'émission des images est une compression JPEG.

La couche de télécommunications se charge de transmettre les images compressées vers la couche terrestre de traitement et de distribution des images.

Les transmissions des images par ladite couche de télécommunications, de la couche spatiale d'acquisition d'images vers la couche terrestre de traitement et de distribution des images peuvent être réalisées par tous types de moyens connus.

Selon une variante de l'invention, la couche de télécommunications est adaptée pour assurer des transferts de données montantes de la couche terrestre de traitement et de distribution d'images vers la couche spatiale. Ces données montantes sont par exemple des données de commande de la couche spatiales d'acquisition d'images. Selon cette variante, les échanges de données entre la couche spatiale d'acquisition d'images et la couche terrestre de traitement et de distribution des images par l'intermédiaire de la couche de télécommunications se font de façon bidirectionnelle.

Ces échanges bidirectionnels permettent d'assurer sans moyen complémentaire particulier la commande des satellites et des dispositifs d'acquisition d'images de la couche spatiale d'acquisition d'images. La couche terrestre de traitement et de distribution d'images étant distribuée sur la surface de la Terre de façon à former une grille de traitement d'images, la commande des satellites peut se faire de n'importe quel point du globe de manière simple et économique.

Selon une variante avantageuse de l'invention, les images sont transmises par ladite couche de télécommunications, de ladite couche spatiale vers la couche terrestre de traitement et de distribution des images suivant un protocole de multiplexage par code large bande (W-CDMA, *Wideband Code Division Multiple Access).*

Un protocole de multiplexage par code large bande, plus connu sous l'acronyme anglais W-CDMA, est un protocole de transmission de données qui utilise un spectre étalé pour répartir les émissions sur de nombreuses fréquences.

Ce protocole est à la base de la norme UMTS (*Universal Mobile Telecommunications System*). Il permet notamment d'envoyer simultanément toutes les données, par paquets et dans le désordre, sur n'importe quelle fréquence de la gamme autorisée. Le module de réception reçoit les données et les met en forme. Cela permet d'atteindre des débits élevés de transmission.

Ainsi un instrument selon l'invention peut avantageusement s'appuyer sur des réseaux de télécommunication terrestre qui utilisent cette norme UMTS.

Dans un proche avenir, la couche de télécommunications pourra également comprendre des réseaux terrestres de télécommunications fondés sur les technologies futures telles que la technologie OFDM (*Orthogonal Frequency Division Multiplexing*) ou la technologie HSPA (*High Speed Downlink Package Acess*).

Avantageusement et selon l'invention, en variante, ladite couche de télécommunications est adaptée pour transmettre les images de ladite couche spatiale vers ladite couche terrestre de traitement et de distribution des images suivant un protocole de communications utilisant une norme Internet du type IPv ou équivalente autorisant des échanges bidirectionnels.

Ce protocole d'échange entre la couche spatiale d'acquisition d'images et la couche terrestre de traitement et de distribution d'images peut, par exemple, utiliser les standards IPv4 ou IPv3, de manière à permettre une interconnexion simple et immédiate avec les réseaux du type internet.

Selon une variante avantageuse de l'invention, la commande de l'ensemble des satellites de la couche spatiale d'acquisition d'images est effectuée par adressage montant vers les satellites vus comme des noeuds de données IP.

Selon une autre variante avantageuse de l'invention, la gestion des données montantes au niveau des satellites est assurée par un module compatible PC sous LINUX ou tout autre standard informatique assurant une compatibilité directe avec les protocoles IP.

Un instrument selon l'invention comprend, pour chaque dispositif de traitement d'images de la couche terrestre de traitement et de distribution d'images, une connexion à un réseau numérique de manière à pouvoir mettre lesdites images mémorisées à disposition d'utilisateurs reliés à ce réseau numérique.

Ce réseau numérique terrestre peut être de tous types.

Néanmoins, avantageusement et selon l'invention, ce réseau numérique est un réseau numérique public.

Un tel réseau est avantageusement compatible IP, et est par exemple le réseau Internet. Cela permet un partage aisé des images prises par un instrument selon l'invention.

Un instrument selon l'invention permet donc de fournir à un utilisateur, une image de n'importe quel point du globe réactualisée chaque jour, l'image présentant une résolution de l'ordre d'un mètre.

Un instrument selon l'invention permet le développement de nombreuses applications nouvelles. En particulier, des domaines aussi variés que l'agriculture, la cartographie, le cadastre, la défense, l'environnement, la planification urbaine, les télécommunications, la gestion des risques, la gestion des ressources renouvelables, etc., possèdent avec un instrument selon l'invention, un moyen d'obtenir des données récentes permettant des analyses diverses. En d'autres termes, un instrument selon l'invention va permettre à tout utilisateur possédant une connexion au réseau numérique, par exemple le réseau Internet, de voir n'importe quel point du globe, l'image de ce point datant au plus d'une journée et présentant une résolution-sol de l'ordre du mètre.

Selon une variante avantageuse de l'invention, l'instrument comprend au moins un serveur terrestre, dit serveur géoportail, localisé quelque part sur la surface du globe, et relié au réseau public. Un utilisateur, peut se connecter au serveur géoportail, par l'intermédiaire du réseau public, pour soumettre une requête de visualisation d'une image d'une région donnée. Le serveur géoportail comprend un module adapté pour déterminer, en fonction de la région correspondant à la requête reçue, le dispositif terrestre de traitement et de distribution d'images comprenant l'image correspondante. Le serveur géoportail se connecte alors par l'intermédiaire du réseau public à ce dispositif terrestre de traitement et de distribution d'images et rapatrie l'image correspondante pour la mettre à disposition de l'utilisateur. Ainsi, selon ce mode de réalisation, la distribution de l'image de la terre sur les différents dispositifs terrestres de traitement et de distribution d'images est totalement transparente pour l'utilisateur. Seul, le serveur géoportail comprend une table de détermination, en fonction des coordonnées de la région correspondant à la requête reçue, du(des) dispositif(s) de traitement comprenant l'image.

Selon une variante avantageuse de l'invention, l'instrument comprend en outre un serveur terrestre, dit serveur géoportail, relié par ledit réseau numérique public, à chaque dispositif terrestre de traitement et de distribution d'images, ledit serveur géoportail comprenant :

- des moyens de réception d'une requête de fourniture d'une image d'une région donnée du globe terrestre en provenance d'un utilisateur,
- des moyens d'analyse de cette requête et de détermination du dispositif terrestre de traitement et de distribution d'images ayant cette image mémorisée dans ses moyens de mémorisation,
- des moyens de rapatriement de ladite image du dispositif terrestre de traitement et de distribution d'images déterminé,
- des moyens de mise à disposition dudit utilisateur de l'image rapatriée.

Un tel serveur géoportail confère à un instrument selon l'invention une capacité de mise à disposition de l'image du globe créée par l'instrument à tout utilisateur connecté au réseau numérique public de manière simple et rapide.

Ainsi, un instrument selon cette variante peut offrir des services non disponibles à ce jour, comme la fourniture, à tout utilisateur disposant d'une connexion Internet, d'une image de n'importe quelle région du globe datant de moins de 24 heures et présentant une résolution-sol de l'ordre du mètre.

L'invention concerne en outre un instrument d'acquisition et de distribution d'images satellitaires d'observation terrestre caractérisé en combinaison par tout ou partie des caractéristiques mentionnées ci-dessus ou ci-après.

D'autres caractéristiques, buts et avantages de l'invention apparaîtront à la lecture de la description suivante qui présente à titre d'exemple non limitatif un mode de réalisation de l'invention, en référence aux dessins annexés sur ces dessins :

- la figure 1 est une vue schématique d'un instrument d'acquisition et de distribution d'images satellitaires d'observation de la Terre selon un mode de réalisation de l'invention,
- la figure 2 est une vue schématique d'un satellite d'une couche spatiale d'acquisition d'images d'un instrument selon un mode de réalisation de l'invention en orbite basse autour de la Terre,
- la figure 3 est une vue schématique d'une couche de terrestre traitement et de distribution d'images et d'une portion d'une couche de télécommunications d'un instrument selon un mode de réalisation de l'invention sur laquelle sont représentés les cercles de visibilité des modules de réception des images et les liaisons entre les dispositifs terrestres de traitement et de distribution d'images adjacents,

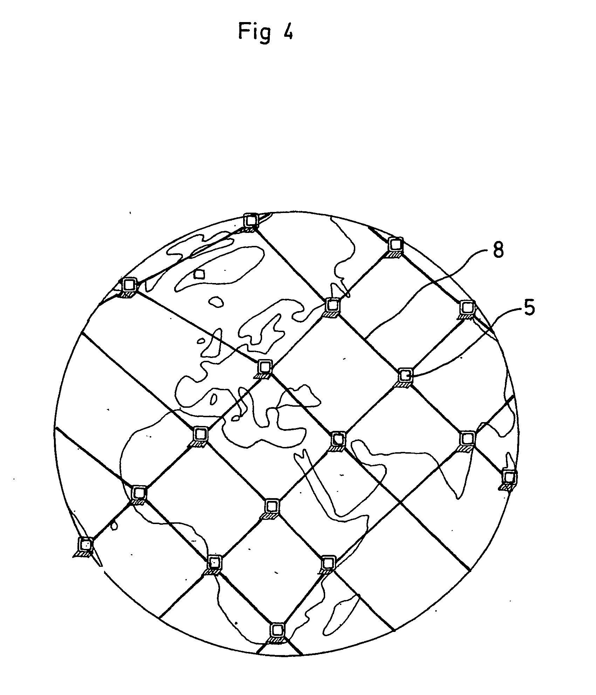

- la figure 4 est une vue schématique d'une couche de traitement d'un instrument selon un mode de réalisation de l'invention sur laquelle sont représentées les liaisons entre deux dispositifs terrestres de traitement et de distribution d'images adjacents,
- la figure 5 est une vue schématique d'un dispositif terrestre de traitement et de distribution d'images d'un instrument selon un mode de réalisation de l'invention.

Sur les figures, les échelles et les proportions ne sont pas respectées et ce, à des fins d'illustration et de clarté.

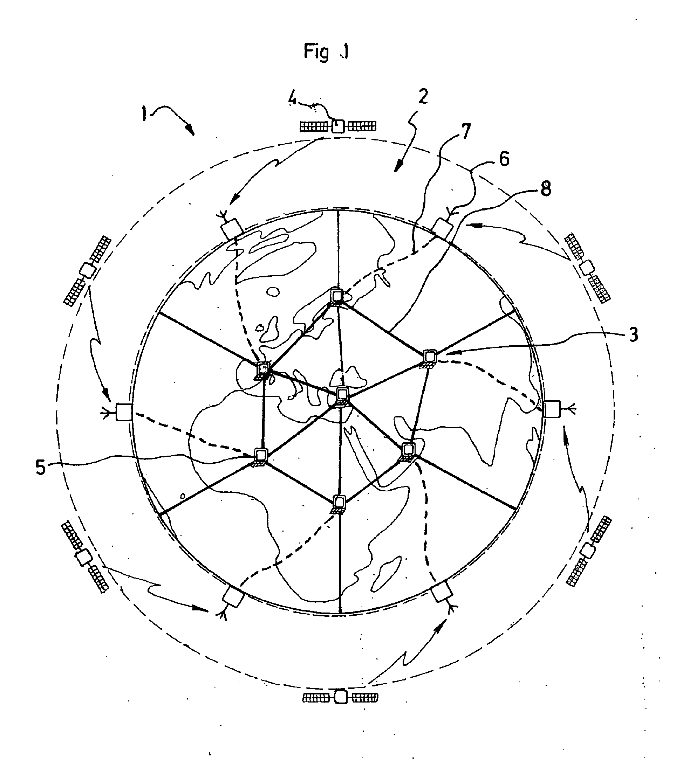

Tel que représenté sur la figure 1, un instrument d'acquisition et de distribution d'images satellitaires d'observation de la Terre selon l'invention comprend une constellation de satellites, dite couche 1 spatiale d'acquisition d'images, une pluralité de dispositifs terrestres de traitement et de distribution d'images, dite couche 3 terrestre de traitement et de distribution d'images, et un réseau de transmission de données, dit couche 2 de télécommunications, adapté pour assurer un transfert des images prises par la couche 1 spatiale d'acquisition d'images vers la couche 3 terrestre de traitement et de distribution des images.

La couche 1 spatiale d'un instrument selon l'invention comprend une pluralité de satellites 4, chaque satellite 4 présentant une fauchée *F* et une orbite basse de telle sorte qu'il puisse décrire un nombre ORB d'orbites en une journée.

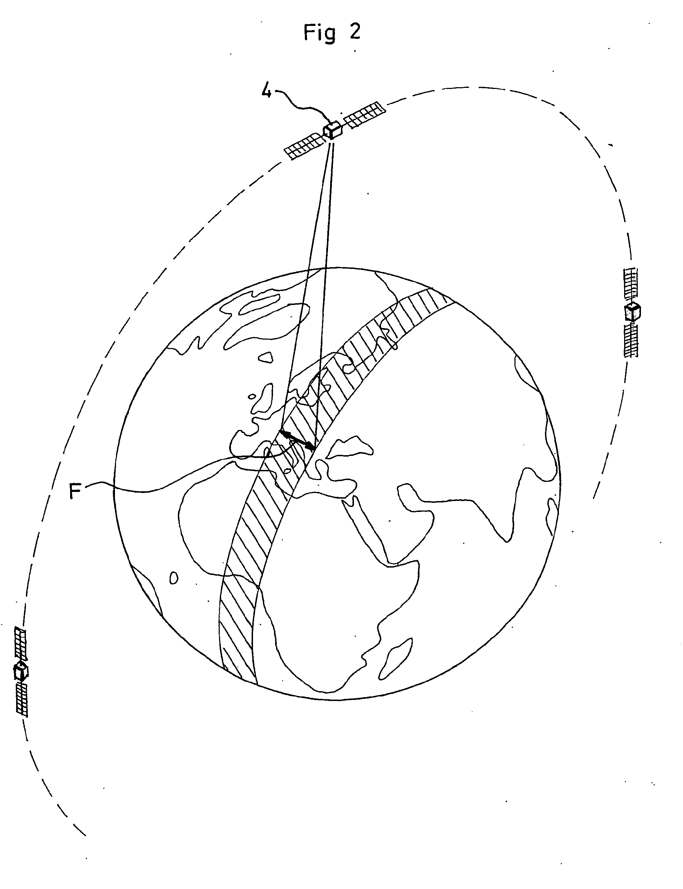

La figure 2 présente un tel satellite 4 en orbite basse autour de la Terre et la trace de ce satellite 4 sur la Terre.

De préférence, chaque satellite 4 d'un instrument selon l'invention effectue plus d'une orbite en une journée. Selon un mode de réalisation de l'invention, chaque satellite 4 effectue seize orbites en une journée.

Chaque satellite 4 comprend en outre au moins un dispositif optique d'acquisition d'images à visée fixe.

Un tel dispositif optique d'acquisition d'images est par exemple une caméra fixe orientée vers la Terre et adaptée pour acquérir des images multispectrales des régions terrestres que le satellite 4 survole.

Ainsi, un satellite 4 d'un instrument selon l'invention ne nécessite pas de programme de pointage particulier, ce qui réduit sensiblement les coûts de fabrication et de maintenance.

Selon un mode de réalisation de l'invention, un tel satellite est un parachute optique.

Chaque satellite 4 comprend en outre au moins un module d'émission d'images adapté pour émettre après chaque acquisition d'images par un dispositif optique d'acquisition d'images de ce satellite 4, l'image acquise vers la couche 3 terrestre de traitement et de distribution des images. Un tel module d'émission peut être de tous types connus et n'est pas décrit ici en détail.

La couche 3 terrestre de traitement et de distribution des images comprend une pluralité de dispositifs 5 terrestres de traitement et de distribution d'images.

Chaque dispositif 5 terrestre de traitement et de distribution d'images comprend au moins un module de réception d'images adapté pour recevoir des images issues de la couche 1 spatiale d'acquisition d'images.

Les modules d'émission d'images des satellites 4 et les modules de réception d'images des dispositifs 5 terrestres de traitement et de distribution d'images forment une partie de la couche 2 de télécommunications.

Cette couche 2 de télécommunications peut comprendre d'autres dispositifs d'émission/réception adaptés pour assurer un transfert des images de la couche 1 spatiale d'acquisition d'images jusqu'à la couche 3 terrestre de traitement des images.

En pratique, les modules d'émission et de réception sont associés à des antennes d'émission et des antennes 6 de réception.

Selon un mode de réalisation de l'invention tel que représenté sur la figure 1, les antennes 6 de réception sont distantes des dispositifs 5 terrestres de traitement et de distribution d'images. Chaque dispositif 5 terrestre de traitement et de distribution d'images est relié à une antenne 6 par une liaison 7. Cette liaison peut être de tous types. Par exemple, cette liaison 7 peut être une liaison filaire, une liaison sans fil radio, wifi, etc.

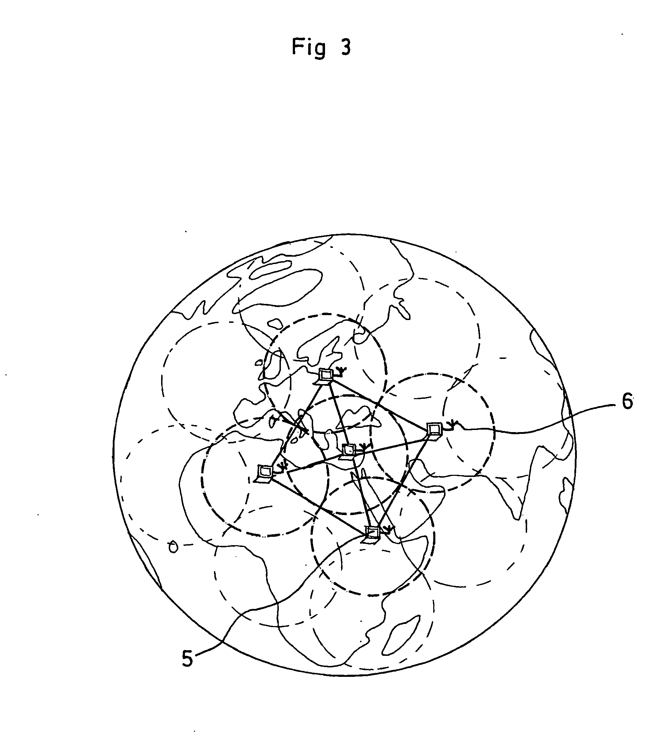

Selon un autre mode de réalisation particulièrement avantageux tel que représenté sur la figure 3, chaque dispositif 5 terrestre de traitement et de distribution d'images comprend localement une antenne 6.

Selon l'invention et tel que représenté sur les figures, chaque dispositif 5 terrestre de traitement et de distribution d'images de la couche 3 terrestre de traitement et de distribution d'images comprend en outre une ligne 8 de communications reliant ce dispositif 5 terrestre de traitement et de distribution d'images et au moins un dispositif terrestre de traitement et de distribution d'images immédiatement adjacent.

Cette ligne 8 de communications permet d'assurer des recouvrements des images reçues par ce dispositif terrestre de traitement et de distribution d'images avec des images reçues par le(les) dispositif(s) terrestre(s) de traitement et de distribution d'images immédiatement adjacent(s). Les lignes 8 de communications peuvent être de tous types. Par exemple, ces lignes 8 de communications peuvent être des liaisons filaires ou des liaisons sans fil.

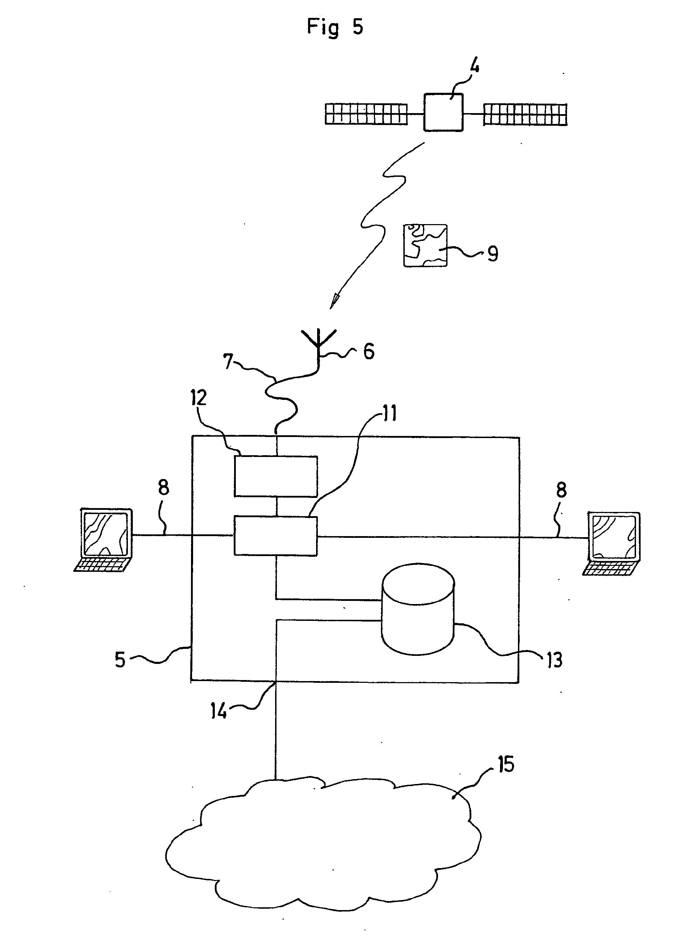

Chaque dispositif 5 terrestre de traitement et de distribution d'images comprend en outre, tel que représenté sur la figure 5, une unité 11 de traitement adaptée pour traiter les images 9 reçues par le module 12 de réception de ce dispositif 5 terrestre de traitement et de distribution d'images.

Une unité 11 de traitement d'images d'un dispositif 5 terrestre de traitement et de distribution d'images est par exemple une unité de traitement d'un micro-ordinateur comprenant des moyens logiciels de traitement des images.

Chaque dispositif 5 terrestre de traitement et de distribution d'images comprend en outre des moyens 13 de mémorisation des images traitées par l'unité 11 de traitement. Ces moyens 13 de mémorisation peuvent être de tous types. Par exemple, ces moyens 13 de mémorisation sont formés d'une mémoire de masse tel qu'une mémoire à disques.

Chaque dispositif 5 terrestre de traitement et de distribution d'images comprend en outre une connexion 14 à un réseau 15 numérique de manière à pouvoir mettre les images mémorisées par les moyens 13 de mémorisation à disposition d'utilisateurs reliés à ce réseau 15 numérique.

Selon un mode préférentiel de réalisation de l'invention, un instrument comprend au moins au moins $N$ satellites, où $N = 2 * \dfrac{C}{ORB * F}$, où C est la circonférence moyenne de la Terre, ORB le nombre d'orbites effectuées par un satellite 4 en une journée, et $F$, sa fauchée.

Selon un mode préférentiel de réalisation de l'invention, un instrument comprend en outre $M$ dispositifs 5 terrestres de traitement et de distribution d'images, où $M = \alpha \cdot \left(\dfrac{C}{\pi.r}\right)^{2}$, $r$ étant le rayon moyen des cercles de visibilité des antennes 6 associées aux modules 12 de réception des dispositifs 5 terrestres de traitement et de distribution d'images et $\alpha$, un coefficient prédéterminé permettant d'assurer un recouvrement des cercles de visibilité.

Selon un mode préférentiel de réalisation, le coefficient $\alpha$ est fixé à 1,2, ce qui permet d'obtenir un taux de recouvrement de 20%.

Par exemple, selon un mode de réalisation de l'invention, $N$ est fixé à 25, chaque satellite 4 présentant une fauchée de 100 km.

Selon un autre mode de réalisation de l'invention, $N$ est fixé à 250, chaque satellite présentant une fauchée de 10 km.

Selon un mode préférentiel de réalisation de l'invention, le nombre de dispositifs 5 terrestres de traitement et de distribution d'images de la couche 3 terrestre de traitement et de distribution d'images est égal au nombre de satellites 4 de la couche 1 spatiale d'acquisition d'images.

Une antenne 6 de réception associée à un module 12 de réception d'un dispositif 5 terrestre de traitement et de distribution d'images peut être de tous types. En particulier, une antenne 6 peut présenter divers cercles de visibilité, en fonction notamment de son élévation. Selon un mode de réalisation de l'invention, chaque antenne 6 présente un cercle de visibilité de 2500 km.

Selon ce mode de réalisation, un instrument selon l'invention peut comprendre 25 antennes 6 associées à 25 dispositifs terrestres de traitement et de distribution d'images distribués sur la surface de la Terre.

Selon un mode de réalisation préférentiel de l'invention, chaque ligne 8 de communication entre deux dispositifs 5 terrestres de traitement et de distribution d'images est une ligne de communication du réseau 15 numérique. Dans le cas où le réseau 15 numérique est le réseau Internet, la mise en place d'un instrument selon l'invention est ainsi particulièrement aisée et économique.

De plus, dans le cas où les antennes 6 de réception sont délocalisées des dispositifs 5 terrestres de traitement et de distribution d'images, les liaisons 7 sont également avantageusement des liaisons du réseau 15 numérique.

En d'autres termes, un instrument selon ce mode de réalisation peut être vu comme un réseau 15 numérique comprenant une pluralité de serveurs formés d'une part, par des dispositifs 5 terrestres de traitement et de distribution d'images et d'autre part, par des satellites 4 en orbite d'acquisition d'images.

Les communications entre la couche 1 spatiale d'acquisition d'images et la couche 3 terrestre de traitement et de distribution d'images, et les communications entre les dispositifs 5 terrestres de traitement et de distribution d'images peuvent être de tous types.

Néanmoins, selon un mode de réalisation préférentiel de l'invention, les communications utilisent un protocole UMTS.

Selon d'autres modes de réalisation, les communications peuvent utiliser d'autres protocoles, comme par exemple les protocoles fondés sur les technologies futures telles que la technologie OFDM (*Orthogonal Frequency Division Multiplexing*) ou la technologie HSPA (*High Speed Downlink Package Acess).*

Selon un mode de réalisation préférentiel de l'invention, les images sont comprimées avant d'être envoyées vers la couche 3 terrestre de traitement et de distribution d'images. Cette compression peut être de tous types, comme par exemple une compression JPEG.

Un instrument selon l'invention permet de manière simple et économique de réaliser des prises de vues métriques quotidiennes de l'ensemble de la Terre.

Ces prises de vues peuvent avantageusement être distribuées par l'intermédiaire d'un serveur central auquel se connecte des utilisateurs agréés.

Pour ce faire, un instrument selon l'invention comprend avantageusement un serveur, dit serveur géoportail, relié par le réseau 15 numérique public, à chaque dispositif 5 de traitement.

Ce serveur comprend des moyens de réception d'une requête de fourniture d'une image d'une région donnée du globe en provenance d'un utilisateur distant, des moyens d'analyse de cette requête et de détermination du dispositif 5 terrestre de traitement et de distribution d'images comprenant l'image 9 correspondante, et des moyens de rapatriement de l'image 9 pour la mettre à disposition dudit utilisateur.

L'image de la Terre obtenue par un instrument selon l'invention est distribuée sur la surface de la Terre. En revanche, pour un utilisateur, cette distribution est transparente étant donné que c'est le serveur géoportail qui se charge, en fonction de la requête reçue, de se connecter aux dispositifs 5 terrestres de traitement et de distribution d'images correspondants et de rapatrier les images pour les mettre à disposition de l'utilisateur.

Un tel serveur géoportail est par exemple un micro-ordinateur comprenant des moyens de calcul, des moyens de mémorisation, des logiciels d'analyse des requêtes et de traitement des requêtes, etc.

Un instrument selon l'invention permet d'acquérir et de fournir des images satellitaires d'observation terrestre qui présentent des résolutions spatiale et temporelle élevées, notamment de l'ordre respectivement du mètre et de la journée.

Un instrument selon l'invention distribue physiquement l'ensemble des images acquises sur la Terre, ce qui permet le rapatriement et le traitement des données. En particulier, les bandes-passantes utilisées sont compatibles avec les technologies aujourd'hui disponibles.

Un instrument selon l'invention ne nécessite aucun dépointage des dispositifs d'acquisition d'images à bord des satellites.

De plus, un instrument selon l'invention ne nécessite aucun serveur central d'enregistrement et/ou de distribution des images et est exempt d'un tel serveur central. Les images sont constamment distribuées sur la Terre et mémorisées dans les moyens de mémorisation des différents dispositifs terrestres de traitement et de distribution des images.

Un instrument selon l'invention est particulièrement adapté à fournir des images de la Terre à des utilisateurs connectés à un réseau numérique public du type Internet. En particulier, un instrument selon l'invention permet à tout utilisateur connecté à ce réseau, de récupérer une image d'une portion de la terre présentant une résolution de l'ordre du mètre et datant de moins d'une journée. Dès lors, un instrument selon l'invention ouvre la voie à de nombreuses applications nouvelles, notamment dans les domaines de la l'agriculture, la cartographie, la sécurité, la défense, l'environnement, la planification urbaine, les télécommunications, la gestion des risques, la gestion des ressources renouvelables, etc.

Un instrument selon l'invention peut faire l'objet de nombreuses variantes non spécifiquement décrites. En particulier, un instrument selon l'invention peut comprendre d'autres dispositifs d'acquisition d'images agencés à bord d'autres engins volants, voire même agencés en haut d'édifices terrestres, tels que des immeubles, et transmettre les images acquises vers la couche de traitement des images par l'intermédiaire de la couche de télécommunications. Cette couche de télécommunications peut également comprendre différents dispositifs additionnels permettant de véhiculer les images de la couche d'acquisition d'images jusqu'à la couche terrestre de traitement et de distribution d'images. Ces dispositifs additionnels sont par exemple des antennes relais, dès réseaux intermédiaires, etc. La couche terrestre de traitement et de distribution d'images peut comprendre une grande variété de dispositifs terrestres de traitement et de distribution d'images distribués sur la surface de la Terre. Ces dispositifs peuvent être des micro-ordinateurs connectés à un réseau public tel qu'Internet, et de manière générale tout dispositif adapté pour recevoir une image, traiter l'image et la mettre à disposition d'utilisateurs du réseau.

**Revendications**

1. Instrument d'acquisition et de distribution d'images d'observation de la Terre de circonférence moyenne C comprenant :

- une constellation de satellites (4), dite couche (1) spatiale d'acquisition d'images, chaque satellite (4) présentant une fauchée *F* et une orbite basse de telle sorte qu'il puisse décrire un nombre *ORB* (*ORB > 1*) d'orbites en une journée, et étant équipé d'au moins un dispositif optique d'acquisition d'images,
- une pluralité de dispositifs (5) terrestres de traitement et de distribution d'images, dite couche (3) terrestre de traitement et de distribution des images,
- un réseau de transmission de données, dit couche (2) de télécommunications, adapté pour assurer un transfert des images prises par la couche (1) spatiale d'acquisition d'images vers ladite couche terrestre de traitement et de distribution des images, ladite couche (2) de télécommunications comprenant :

. pour chaque satellite (4), au moins un module d'émission adapté pour émettre après chaque acquisition d'images par un dispositif optique d'acquisition d'images de ce satellite, l'image (9) acquise vers ladite couche (3) terrestre de traitement et de distribution des images,
. pour chaque dispositif (5) terrestre de traitement et de distribution d'images, au moins un module (12) de réception adapté pour recevoir des images (9) issues de ladite couche (1) spatiale d'acquisition d'images,

**caractérisé en ce que** :

- ladite couche (1) spatiale d'acquisition d'images comprend, pour chaque satellite (4), au moins un dispositif optique d'acquisition d'images à visée fixe présentant une résolution spatiale élevée,
- ladite couche (3) terrestre de traitement et de distribution d'images comprend, pour chaque dispositif (5) de traitement et de distribution d'images, au moins une ligne (8) de communications reliant ce dispositif (5) terrestre de traitement et de distribution d'images et au moins un dispositif terrestre de traitement et de distribution d'images immédiatement adjacent, de manière à permettre des recouvrements des images reçues par ce dispositif (5) terrestre de traitement et de distribution d'images avec des images reçues par ce(s) dispositif(s) terrestre(s) de traitement et de distribution d'images immédiatement adjacent(s),
- chaque dispositif (5) de traitement et de distribution d'images comprend :

. une unité (11) de traitement adaptée pour traiter les images (9) reçues par le module (12) de réception de ce dispositif (5) terrestre de traitement et de distribution d'images,
. des moyens (13) de mémorisation des images traitées par l'unité (11) de traitement,
. une connexion (14) à un réseau numérique (15) de manière à pouvoir mettre lesdites images mémorisées à disposition d'utilisateurs reliés à ce réseau (15) numérique.

2. Instrument selon la revendication 1, **caractérisé en ce que** chaque satellite (4) de ladite couche (1) spatiale d'acquisition d'images comprend au moins un instrument optique d'acquisition d'images à visée fixe présentant une résolution spatiale de l'ordre du mètre.

3. Instrument selon l'une des revendications 1 ou 2, **caractérisé en ce que** :

- chaque module d'émission de ladite couche (2) de télécommunication est adapté pour communiquer avec au moins un module d'émission adjacent,
- chaque module (12) de réception de ladite couche (2) de télécommunication est adapté pour communiquer avec au moins un module de réception adjacent.

4. Instrument selon l'une des revendications 1 à 3, **caractérisé en ce que** lesdits satellites (4) de ladite couche (1) spatiale d'acquisition d'images, lesdits dispositifs (5) terrestres de traitement et de distribution d'images de ladite couche (3) terrestre de traitement et de distribution d'images, lesdits modules d'émission d'images de ladite couche (2) de télécommunications et lesdits modules (12) de réception d'images de ladite couche (2) de télécommunications sont géographiquement distribués sur l'ensemble de la Terre.

5. Instrument selon l'une des revendications 1 à 4, **caractérisé en ce que** :

- ladite couche (1) spatiale d'acquisition d'image comprend au moins au moins $N$ satellites (4),

où $N = 2 * \dfrac{C}{ORB * F}$,

- ladite couche (3) terrestre de traitement et de distribution d'images comprend au moins $M$ dispositifs (5) terrestres de traitement et de distribution d'images distribués sur la surface de la Terre, où $M = \alpha . \left( \dfrac{C}{\pi . r} \right)^2$, $r$ étant le rayon moyen des cercles de visibilité d'antennes (6) associées aux modules (12) de réception des dispositifs (5) terrestres de traitement et de distribution d'images et $\alpha$, un coefficient prédéterminé.

6. Instrument selon l'une des revendications 1 à 5, **caractérisé en ce que** ladite couche (1) spatiale d'acquisition d'image comprend au moins 25 satellites (4), chaque satellite (4) présentant une fauchée de l'ordre de 100 kilomètres.

7. Instrument selon l'une des revendications 1 à 6, **caractérisé en ce que** ladite couche (1) spatiale d'acquisition d'images comprend au moins 250 satellites (4), chaque satellite (4) présentant une fauchée de l'ordre de 10 kilomètres.

8. Instrument selon l'une des revendications 1 à 7, **caractérisé en ce que** chaque satellite (4) présente une orbite quasi-polaire héliosynchrone.

9. Instrument selon l'une des revendications 1 à 8, **caractérisé en ce que**, pour chaque satellite (4), ledit module d'émission des images de ladite couche (2) de télécommunications est adapté pour assurer une compression des images (9).

10. Instrument selon la revendication 9, **caractérisé en ce que**, pour chaque satellite (4), ladite compression effectuée par ledit module d'émission des images est une compression JPEG.

11. Instrument selon l'une des revendications 1 à 10, **caractérisé en ce que** ladite couche (2) de télécommunications transmet lesdites images (9) de ladite couche (1) spatiale vers ladite couche (3) terrestre de traitement et de distribution d'images suivant un protocole UMTS.

12. Instrument selon l'une des revendications 1 à 10, **caractérisé en ce que** ladite couche de télécommunications transmet les images de ladite couche spatiale vers ladite couche terrestre de traitement et de distribution d'images suivant un protocole de communications utilisant une norme Internet du type IPv ou équivalente autorisant des échanges bidirectionnels.

13. Instrument selon l'une des revendications 1 à 12, **caractérisé en ce que** ledit réseau (15) numérique auquel peuvent être connectés lesdits dispositifs (5) terrestres de traitement et de distribution d'images de ladite couche (3) terrestre de traitement et de distribution d'images est un réseau (15) numérique public.

14. Instrument selon la revendication 13, **caractérisé en ce qu'**il comprend un serveur terrestre, dit serveur géoportail, relié par ledit réseau (15) numérique public à chaque dispositif (5) terrestre de traitement et de distribution d'images, ledit serveur géoportail comprenant :

- des moyens de réception d'une requête de fourniture d'une image d'une région donnée du globe en provenance d'un utilisateur distant,
- des moyens d'analyse de cette requête et de détermination du dispositif (5) terrestre de traitement et de distribution d'images ayant cette image mémorisée dans ses moyens (13) de mémorisation,
- des moyens de rapatriement de ladite image du dispositif (5) terrestre de traitement et de distribution d'images déterminé,
- des moyens de mise à disposition dudit utilisateur de l'image rapatriée.

**Claims**

1. Instrument for acquisition and distribution of observation images of the Earth of mean circumference C comprising:

- a constellation of satellites (4), called the spatial images acquisition layer (1), each satellite (4) exhibiting a swath $F$ and a low orbit so that it can describe a number $ORB$ ($ORB > 1$) of orbits in one day, and being equipped with at least one optical images acquisition device,
- a plurality of terrestrial images processing and distribution devices (5), called the terrestrial images processing and distribution layer (3),
- a data- transmission network, called the telecommunications layer (2), that is suitable to ensure a transfer of the images captured by said spatial images acquisition layer (1) to said terrestrial images processing and distribution layer, said telecommunications layer (2) comprising:

. for each satellite (4), at least one sending module that is suitable to send, after each acquisition of images by said at least one optical images acquisition device of pertaining to said satellite, the acquired image (9) to said terrestrial images processing and distribution layer (3),
. for each terrestrial images processing and distribution device (5), at least one receiving module (12) that is suitable to receive images (9) resulting from said spatial images acquisition layer (1),

wherein:

- said spatial images acquisition layer (1) comprises, for each satellite (4), at least one optical images acquisition device having a fixed aiming and exhibiting a high spatial resolution,
- said terrestrial images processing and distribution layer (3) includes, for each terrestrial images processing and distribution device (5), at least one communications line (8) coupling said terrestrial images processing and distribution device (5) and at least one immediately adjacent terrestrial images processing and distribution device so as to enable overlaps of the images received by said terrestrial images processing and distribution device (5) with images received by said at least one immediately adjacent terrestrial images processing and distribution device(s),
- each terrestrial images processing and distribution device (5) comprises:

. a processing unit (11) that is suitable to process the images (9) received by said receiving module (12) of said terrestrial images processing and distribution device (5) for,
. memory means (13) receiving and storing said images processed by said processing unit (11),
. a connection (14) to a digital network (15) allowing to place said stored images at the disposal of users coupled to said digital network (15).

2. Instrument as claimed in Claim 1, wherein each satellite (4) of said spatial images acquisition layer (1) includes at least one optical images acquisition instrument for with fixed aiming exhibiting a spatial resolution of the order of one metre.

3. Instrument as claimed in one of Claims 1 or 2, wherein:

- each sending module of said telecommunications layer (2) is suitable to communicate with at least one adjacent sending module,
- each receiving module (12) of said telecommunications layer (2) is suitable to communicate with at least one adjacent receiving module.

4. Instrument as claimed in one of Claims 1 to 3, wherein said satellites (4) of said spatial images acquisition layer (1), said terrestrial images processing and distribution devices (5) for pertaining to said terrestrial images processing and distribution layer (3), said modules for sending images pertaining to said telecommunications layer (2), and said modules (12) for receiving images pertaining to said telecommunications layer (2) are geographically distributed over the whole of the Earth.

5. Instrument as claimed in one of Claims 1 to 4, wherein:

- said spatial images acquisition layer (1) comprises at least $N$ satellites (4), where

$$N = 2 * \frac{C}{ORB * F},$$

- said terrestrial images processing and distribution layer (3) comprises at least $M$ terrestrial images processing and distribution devices (5) distributed over the surface of the Earth, where

$$M = \alpha.\left(\frac{C}{\pi.r}\right)^2, \quad r \text{ being the mean radius of}$$

the circles of visibility of antennas (6) linked with the receiving modules (12) of the terrestrial images processing and distribution devices (5), and $\alpha$ being a predetermined coefficient.

6. Instrument as claimed in one of Claims 1 to 5, wherein said spatial images acquisition layer (1) comprises at least 25 satellites (4), each satellite (4) exhibiting a swath of the order of 100 kilometres.

7. Instrument as claimed in one of Claims 1 to 6, wherein said spatial images acquisition layer (1) comprises at least 250 satellites (4), each satellite (4) exhibiting a swath of the order of 10 kilometres.

8. Instrument as claimed in one of Claims 1 to 7, wherein each satellite (4) exhibits a heliosynchronous quasi-polar orbit.

9. Instrument as claimed in one of Claims 1 to 8, wherein for each satellite (4) said module for sending the images pertaining to said telecommunications layer (2) is suitable to ensure a compression of the images (9).

10. Instrument as claimed in Claim 9, wherein for each satellite (4) said compression effected by said module for sending the images is a JPEG compression.

11. Instrument as claimed in one of Claims 1 to 10, wherein said telecommunications layer (2) transmits said images (9) from said spatial layer (1) to said terrestrial images processing and distribution layer (3) in accordance with a UMTS protocol.

12. Instrument as claimed in one of Claims 1 to 10, wherein said telecommunications layer transmits the images from said spatial layer to said terrestrial images processing and distribution layer in accordance with a communications protocol using an Internet standard of the IPv type or equivalent enabling bidirectional exchanges.

13. Instrument as claimed in one of Claims 1 to 12, wherein said digital network (15) to which said terrestrial images processing and distribution devices (5) pertaining to said terrestrial images processing and distribution layer (3) can be connected is a public digital network (15).

14. Instrument as claimed in Claim 13, wherein it includes a terrestrial server, called the geoportal server, coupled by said public digital network (15) to each terrestrial images processing and distribution device (5), said geoportal server comprising:

- means for receiving a request for provision of an image of a given region of the globe originating from a remote user,
- means for analysis of said request and for determination of the terrestrial images processing and distribution device (5) having said image stored in its memory means (13),
- means for downloading said image from the determined terrestrial images processing and distribution device (5),
- means for placing the downloaded image at the disposal of said user.

**Patentansprüche**

1. Instrument für die Erfassung und die Verteilung von Beobachtungsbildern der Erde mit durchschnittlichem Umfang C mit folgenden Teilen:

- eine Satellitenkonstellation (4), die sogenannte Raumschicht (1) für die Bilderfassung, wobei jeder Satellit (4) eine Abtastbreite F und eine niedrige Umlaufbahn aufweist, so daß er eine Anzahl *ORB (ORB > 1)* Umlaufbahnen an einem Tag beschreiben kann, und wobei er mit zumindest einer optischen Vorrichtung für die Bilderfassung ausgerüstet ist,
- eine Mehrzahl terrestrischer Vorrichtungen (5) für die Verarbeitung und Verteilung von Bildern, die sogenannte terrestrische Schicht (3) für die Verarbeitung und Verteilung von Bildern,
- ein Datenübertragungsnetz, die sogenannte Telekommunikationsschicht (2), die geeignet ist, einen Transfer der von der Raumschicht (1) für die Bilderfassung aufgenommenen Bilder zur terrestrischen Schicht für die Verarbeitung und Verteilung von Bildern zu gewährleisten, wobei die besagte Telekommunikationsschicht (2) folgende Elemente umfaßt:

. für jeden Satelliten (4) zumindest ein Sendemodul, das geeignet ist, nach jeder Bilderfassung durch eine optischen Vorrichtung für die Bilderfassung dieses Satelliten das erfaßte Bild (9) an die besagte terrestrische Schicht (3) für die Verarbeitung und Verteilung von Bildern zu senden,
. für jede terrestrische Vorrichtung (5) für die Verarbeitung und Verteilung von Bildern zumindest ein Empfangsmodul (12), das geeignet ist, Bilder (9) zu empfangen, die aus der besagten Raumschicht (1) für die Bilderfassung hervorgegangen sind,

**dadurch gekennzeichnet, daß**:

- die besagte Raumschicht (1) für die Bilderfassung für jeden Satelliten (4) zumindest eine optische Vorrichtung für die Bilderfassung mit fixer Visur umfaßt, die eine hohe räumliche Auflösung aufweist,
- die besagte terrestrische Schicht (3) für die Verarbeitung und Verteilung von Bildern für jede Vorrichtung (5) für die Verarbeitung und Verteilung von Bildern zumindest eine Kommunikationsleitung (8) umfaßt, die diese terrestrische Vorrichtung (5) für die Verarbeitung und Verteilung von Bildern und zumindest eine direkt anschließende terrestrische Vorrichtung (5) für die Verarbeitung und Verteilung von Bildern verbindet, so daß Überdeckungen der von dieser terrestrischen Vorrichtung (5) für die Verarbeitung und Verteilung von Bildern empfangenen Bilder mit den von dieser/diesen direkt anschließenden terrestrischen Vorrichtung(en) (5) empfangenen Bildern möglich sind,
- jede Vorrichtung (5) für die Verarbeitung und Verteilung von Bildern folgende Elemente umfaßt:

. eine Verarbeitungseinheit (11), die geeignet ist, die vom Empfangsmodul (12) dieser terrestrischen Vorrichtung (5) für die Verarbeitung und Verteilung von Bildern empfangenen Bilder (9) zu verarbeiten,
• Mittel (13) für die Speicherung der von der Verarbeitungseinheit (11) verarbeiteten Bilder,
• einen Anschluß (14) an ein digitales Netz (15), so daß die besagten gespeicherten Bilder den an dieses digitale Netz (15) angeschlossenen Nutzern zur Verfügung gestellt werden können.

2. Instrument nach Anspruch 1, **dadurch gekennzeichnet, daß** jeder Satellit (4) der besagten Raumschicht (1) für die Bilderfassung zumindest ein optisches Instrument für die Bilderfassung mit fixer Visur umfaßt, das eine räumliche Auflösung im Bereich eines Meters aufweist.

3. Instrument nach einem beliebigen der vorstehenden Ansprüche 1 oder 2, **dadurch gekennzeichnet, daß**:

- jedes Sendemodul der besagten Telekommunikationsschicht (2) für die Kommunikation mit zumindest einem anschließenden Sendemodul geeignet ist,
- jedes Empfangsmodul (12) der besagten Telekommunikationsschicht (2) für die Kommunikation mit zumindest einem anschließenden Empfangsmodul geeignet ist.

4. Instrument nach einem beliebigen der vorstehenden Ansprüche 1 bis 3, **dadurch gekennzeichnet, daß** die besagten Satelliten (4) der besagten Raumschicht (1) für die Bilderfassung, die besagten terrestrischen Vorrichtungen (5) für die Verarbeitung und Verteilung von Bildern der besagten terrestrischen Schicht (3) für die Verarbeitung und Verteilung von Bildern, die besagten Sendemodule für Bilder der besagten Telekommunikationsschicht (2) und die besagten Empfangsmodule (12) für Bilder der besagten Telekommunikationsschicht (2) geographisch über die gesamte Erde verteilt sind.

5. Instrument nach einem beliebigen der vorstehenden Ansprüche 1 bis 4, **dadurch gekennzeichnet, daß**:

- die besagte Raumschicht (1) für die Bilderfassung zumindest $N$ Satelliten (4) umfaßt, wobei

$$N = 2 * \frac{C}{ORB * F},$$

- die besagte terrestrische Schicht (3) für die Verarbeitung und Verteilung von Bildern zumindest $M$ terrestrische Vorrichtungen (5) für die Verarbeitung und Verteilung von Bildern umfaßt, die über der Oberfläche der Erde verteilt sind, wobei $M = \alpha \cdot \left( \frac{C}{\pi.r} \right)^2$, wobei r der durchschnittliche Radius der Kreise der Antennensichtbarkeit (6) in Verbindung mit den Empfangsmodulen (12) der terrestrischen Vorrichtungen (5) für die Verarbeitung und Verteilung von Bildern und $\alpha$ ein vorbestimmter Koeffizient ist.

6. Instrument nach einem beliebigen der vorstehenden Ansprüche 1 bis 5, **dadurch gekennzeichnet, daß** die besagte Raumschicht (1) für die Bilderfassung zumindest 25 Satelliten (4) umfaßt, wobei jeder Satellit (4) eine Abtastbreite von 100 Kilometer aufweist.

7. Instrument nach einem beliebigen der vorstehenden Ansprüche 1 bis 6, **dadurch gekennzeichnet, daß** die besagte Raumschicht (1) für die Bilderfassung zumindest 250 Satelliten (4) umfaßt, wobei jeder Satellit (4) eine Abtastbreite von 10 Kilometer aufweist.

8. Instrument nach einem beliebigen der vorstehenden Ansprüche 1 bis 7, **dadurch gekennzeichnet, daß** jeder Satellit (4) eine quasipolare heliosynchrone Umlaufbahn aufweist.

9. Instrument nach einem beliebigen der vorstehenden Ansprüche 1 bis 8, **dadurch gekennzeichnet, daß** für jeden Satelliten (4) das besagte Sendemodul der Bilder der besagten Telekommunikationsschicht (2) geeignet ist, eine Kompression der Bilder (9) zu gewährleisten.

10. Instrument nach Anspruch 9, **dadurch gekennzeichnet, daß** für jeden Satelliten (4) die besagte vom besagten Sendemodul der Bilder durchgeführte Kompression eine JPEG Kompression ist.

11. Instrument nach einem beliebigen der vorstehenden Ansprüche 1 bis 10, **dadurch gekennzeichnet, daß** die besagte Telekommunikationsschicht (2) die besagten Bilder (9) der besagten Raumschicht (1) nach einem UMTS Protokoll an die terrestrische Schicht (3) für die Verarbeitung und Verteilung von Bildern übermittelt.

12. Instrument nach einem beliebigen der vorstehenden Ansprüche 1 bis 10, **dadurch gekennzeichnet, daß** die besagte Telekommunikationsschicht die besagten Bilder der besagten Raumschicht an die terrestrische Schicht für die Verarbeitung und Verteilung von Bildern übermittelt, und dies nach einem Kommunikationsprotokoll mit Nutzung einer Internet-Norm vom Typ IPv oder gleichwertig, die bidirektionalen Austausch zuläßt.

13. Instrument nach einem beliebigen der vorstehenden Ansprüche 1 bis 12, **dadurch gekennzeichnet, daß** das besagte digitale Netz (15), an das die besagten terrestrischen Vorrichtungen (5) für die Verarbeitung und Verteilung von Bildern der besagten terrestrischen Schicht (3) für die Verarbeitung und Verteilung von Bildern abgeschlossen werden können, ein öffentliches digitales Netz (15) ist.

14. Instrument nach Anspruch 13, **dadurch gekennzeichnet, daß** es einen terrestrischen Server umfaßt, einen sogenannten Geoportal-Server, der über das besagte digitale Netz (15) mit jeder terrestrischen Vorrichtung (5) für die Verarbeitung und Verteilung von Bildern verbunden ist, wobei der besagte Geoportal-Server folgende Elemente umfaßt:

    - Mittel für den Empfang einer Anfrage nach Lieferung eines von einem rechnerfernen Nutzer kommenden Bildes einer gegebenen Region des Erdballs,
    - Mittel für die Auswertung dieser Anfrage und die Bestimmung der terrestrischen Vorrichtung (5) für die Verarbeitung und Verteilung von Bildern, die dieses Bild in ihren Speichermitteln (13) gespeichert hat,
    - Mittel für die Einholung des besagten Bildes der bestimmten terrestrischen Vorrichtung (5) für die Verarbeitung und Verteilung von Bildern,
    - Mittel, mit denen das eingeholte Bild dem besagten Nutzer zur Verfügung gestellt wird.

Fig. 1

## Fig 2

Fig 3

Fig 4

## Fig 5

**EP 2 185 417 B1**

**RÉFÉRENCES CITÉES DANS LA DESCRIPTION**

**Documents brevets cités dans la description**

- FR 2893794 A